# EUROPÄISCHE PATENTSCHRIFT

(11) **EP 1 307 794 B1**
(45) Veröffentlichungstag und Bekanntmachung des Hinweises auf die Patenterteilung: **09.01.2008**
(21) Anmeldenummer: 01969214.4
(22) Anmeldetag: 06.08.2001
(51) Int. Cl.: G05B 19/042

(54) **VERFAHREN SOWIE VERARBEITUNGSSYSTEM ZUR ERMITTLUNG DER RÄUMLICHEN STRUKTUR EINES STEUERUNGSSYSTEMS**
METHOD AND PROCESSING SYSTEM FOR DETERMINING THE SPATIAL STRUCTURE OF A CONTROL SYSTEM
PROCEDE ET SYSTEME DE TRAITEMENT PERMETTANT LA DETERMINATION DE LA STRUCTURE SPATIALE D'UN SYSTEME DE COMMANDE

(30) Priorität: 11.08.2000 DE 10039415
(43) Veröffentlichungstag der Anmeldung: 07.05.2003
(73) Patentinhaber: SIEMENS AKTIENGESELLSCHAFT, 80333 München (DE)
(72) Erfinder: LINKE, Stefan, 90475 Nürnberg (DE)
(86) Internationale Anmeldenummer: PCT/DE2001/003005
(87) Internationale Veröffentlichungsnummer: WO 2002/014963

(56) Entgegenhaltungen:
- EP-A- 0 770 944
- EP-A- 0 833 426
- WO-A-00/20938
- DE-A- 19 546 831
- DE-A- 19 624 929
- DE-A- 19 857 649
- US-A- 5 519 878

## Beschreibung

Die Erfindung bezieht sich auf ein Verfahren sowie ein Verarbeitungssystem zur Ermittlung der Topologie eines Steuerungssystems im Hinblick auf die Positionen/Positionierungsmöglichkeiten von Systembausteinen.

Ein Steuerungssystem, beispielsweise ein Automatisierungs-oder Prozessleitsystem, ist in der Regel aus einer Anzahl von Systembausteinen aufgebaut. Unter Systembausteine werden hier alle Komponenten verstanden, die in einem Steuerungssystem enthalten sind bzw. enthalten sein können. Zu Systembausteine zählen Software-Komponenten und insbesondere HardwareKomponenten. Als Beispiele für Systembausteine im vorliegenden Sinn sind Bussysteme, beispielsweise ein Ringbussystem oder ein Feldbussystem, sowie Steuerungssystemeinheiten und Endkomponenten zu nennen. Unter Steuerungssystemeinheiten werden hierbei beispielsweise Automatisierungs-Systemeinheiten oder Prozessleitsystem-Systemeinheiten verstanden, die in sich eine abgeschlossene Steuerungseinheit bilden und beispielsweise zur Steuerung von bestimmten Anlagenteilen dienen. Diese Steuerungssystemeinheiten können daher als ein Subsystem zum übergeordneten Steuerungssystem aufgefasst werden. Endkomponenten können Rechnereinheiten, Messeinheiten, Stell- und Steuereinheiten oder dgl. sein. Softwaremodule im Sinne von Systembausteinen sind beispielsweise Kommunikationsschnittstellen oder Datenverarbeitungsprogramme.

Die Projektierung eines komplexen Steuerungssystems für eine industrielle Anlage erfolgt in einem ersten Schritt in der Regel an einem Computer, indem die gewünschten Komponenten, also die Systembausteine, zur Realisierung des Anlagenkonzepts geeignet zusammengestellt werden. Hierbei werden gewöhnlich aus einem elektronischen Katalog die unterschiedlichen Systembausteine angeboten. Im Zuge der Projektierung wird nach und nach die räumliche Struktur des Steuerungssystems im Hinblick auf die Positionen der Systembausteine aufgebaut. Die räumliche Struktur wird auch als Topologie bezeichnet. In der Regel weisen die einzelnen Systembausteine bereits eine eigene vordefinierte räumliche Struktur (Topologie) auf. Wird beispielsweise bei der Projektierung als Systembaustein ein spezielles Bussystem ausgewählt, so ist mit dieser Auswahl zugleich eine räumliche Struktur vorgegeben. Beispielsweise definiert der ausgewählte Systembaustein einen Ringbus, welcher insgesamt eine bestimmte Anzahl von Anschlussmöglichkeiten bietet. Auch bei der Auswahl einer speziellen Steuerungssystemeinheit ist die grundlegende Topologie festgelegt. Denn beispielsweise ist für diese Einheit eine hardwaretechnische Ausgestaltung festgelegt, die auf einer ersten Ebene eine festgelegte Anzahl von Schaltkästen (Racks) und in einer zweiten Ebene jedem Schaltkasten eine festgelegte Anzahl von Einsteckplätzen (Slots) zuordnet.

Bei der Projektierung ist das Bedienpersonal mit dem Problem konfrontiert, dass es sehr viel Know-How über die einzelnen Systembausteine besitzen muss, insbesondere über deren räumliche Struktur. Dieses Problem stellt sich in ähnlicher Weise auch bei bestehenden Anlagen oder bei nur teilweise projektierten Anlagen, bei denen Ergänzungen vorgenommen werden sollen. Das Bedienpersonal muss aufgrund von eigenem Wissen über die einzelnen Systembausteine erkennen, wie die Topologie des Steuerungssystems aussieht, und wo beispielsweise noch freie Plätze für Hardwarekomponenten sind.

Aus der DE 198 57 649 A1 ist ein verteiltes Steuerungssystem mit Anlagenkomponenten bekannt, die ihre Lage als komponentenspezifische Daten, welche die räumlichen Koordinaten repräsentieren, in einem Speicher enthalten und über einen Kommunikationskanal an eine Projektierungseinrichtung übertragen. Anhand eines Anlagenplanes nach Art eines Rohr- und Installationsschemas werden die komponentenspezifischen Daten der einzelnen Anlagenkomponenten den projektierten Komponenten zugewiesen und jeweils eine physikalische Adresse vergeben.

Der Erfindung liegt die Aufgabe zugrunde, die automatische Ermittlung der Topologie eines Steuerungssystems im Hinblick auf die Position/Positionierungsmöglichkeiten von Systembausteinen zu ermöglichen.

Die Aufgabe wird erfindungsgemäß gelöst durch ein Verfahren gemäß Anspruch 1.

Der entscheidende Vorteil dieses Verfahrens ist darin zu sehen, dass die Topologieinformationen abgespeichert und abgerufen werden können. Die Informationen sind dabei durch eine einfache Abfrageroutine automatisch ermittelbar. Damit bedarf es für das Bedienpersonal keines umfangreichen Wissens über den räumlichen Aufbau eines Systembausteins, also über die Anordnung oder Anordnungsmöglichkeiten von weiteren Systembausteinen oder Komponenten. Der ausgewählte Systembaustein ist beispielsweise bei der Erstprojektierung von dem Bedienpersonal als Haupt- oder Grundsystembaustein ausgewählt worden. Der ausgewählte Systembaustein kann aber auch bei einem bestehenden Steuerungssystem ein bereits in der Anlage eingebauter Systembaustein sein.

Um eine einfache Projektierung zu ermöglichen, wird die ermittelte räumliche Struktur des Systembausteins graphisch dargestellt. Im einfachsten Fall erfolgt dies, indem die Topologie auf einem Anzeigegerät, beispielsweise Bildschirm dargestellt wird.

Vorzugsweise wird bei der Ermittlung der Positionen/Positionierungsmöglichkeiten des ausgewählten Systembausteins erfasst, ob eine der Positionierungsmöglichkeiten mit einem weiteren Systembaustein belegt ist. Dies ist von entscheidendem Vorteil bei bereits bestehenden Anlagen oder bei teilweise projektierten Anlagen, um sich einen Überblick über die bereits bestehende Topologie verschaffen zu können. Dem Bedienpersonal wird also angezeigt, ob einzelne Positionen des ausgewählten Systembausteins bereits besetzt sind. Es erkennt daher sofort, an welchen Positionen noch Erweiterungsmöglichkeiten sind.

Die Information, dass eine bestimmte Position von einem weiteren Systembaustein belegt wird, wird in vorteilhafter Ausbildung in dem Informationsmodul des ausgewählten Systembausteins niedergelegt. Damit wird gewährleistet, dass Änderungen im Zuge der Projektierung erfasst werden und an einer einzigen die Topologieinformation des jeweiligen Systembausteins beinhaltenden Stelle abgespeichert werden. Dies hat den Vorteil, dass beim Abrufen der Topologieinformation des ausgewählten Systembausteins sofort die Information erscheint, welche Position bereits belegt ist.

In zweckdienlicher Ausbildung wird gleichzeitig abgespeichert, welche Position mit welchem weiteren Systembaustein belegt ist. Das Bedienpersonal erhält somit nicht nur die Information, dass eine Position belegt ist, sondern erhält darüber hinaus die Information, mit welchem weiteren Systembaustein diese Position belegt ist. Damit werden also auch die an dem ausgewählten Systembaustein angeordneten weiteren Systembausteine transparent und die Topologie des Steuerungssystems ist für das Bedienpersonal einfach zu erschließen.

Vorzugsweise wird dabei der weitere Systembaustein an der jeweiligen Position graphisch dargestellt. Die graphische Darstellung ist dabei insbesondere derart gewählt, dass das Bedienpersonal anhand der Symbolik sofort erkennt, um welchen Systembaustein es sich handelt.

In einer besonders zweckdienlichen Ausbildung ist jedem Systembaustein eine Kennung zugeordnet. Die Kennung umfasst insbesondere eine Typ- und eine Instanzkennung. Die Typkennung gibt dabei den Typ des Systembausteins an, und die Instanzkennung steht für einen speziellen Systembaustein dieses Typs. Die Typkennung ist abstrakt in dem Sinne, dass sie unabhängig von der speziellen Ausbildung des jeweiligen Systembausteins ist. Die Instanzkennung ist abstrakt in dem Sinne, dass sie unabhängig von der Projektierungssoftware (Anwendungsprogramm) ist und systemspezifische Daten enthalten kann. Die Kennung ist also als eine Art Schlüssel ausgebildet, die lediglich eine abstrakte Zuordnung ermöglicht.

Dadurch ist das System zur automatischen Ermittlung der Topologie vergleichsweise einfach aufgebaut. Ist nämlich an dem ausgewählten Systembaustein ein weiterer Systembaustein bereits platziert, so wird die Information, um welchen Systembaustein es sich handelt, in dem dem ausgewählten Systembaustein zugeordneten Informationsmodul lediglich in Form der Kennung niedergelegt. Mit der Kennung ist eine eindeutige Zuordnung des Systembausteins gewährleistet. Über die Schnittstelle des Informationsmoduls des ausgewählten Systembausteins wird also die Topologieinformation des ausgewählten Systembausteins übermittelt zuzüglich der Kennung von weiteren Systembausteinen, die an bestimmten Positionen des ausgewählten Systembausteins bereits vorliegen.

Der Vorteil ist darin zu sehen, dass weder eine Anwendung zur automatischen Ermittlung der Topologie, also beispielsweise eine Projektierungssoftware, noch das Informationsmodul des ausgewählten Systembausteins die tatsächliche Topologie des weiteren Systembausteins kennen muss. Die Kommunikation zwischen der Projektierungssoftware (Anwendungsprogramm) und den einzelnen Informationsmodulen erfolgt daher über die jeweiligen Schnittstellen der Informationsmodule verschlüsselt, und ist unabhängig von komponenten- und herstellerspezifischen Randbedingungen bezüglich der jeweiligen Systembausteine. Dadurch ist eine leichte Erweiterbarkeit des Systems gegeben. Ein neuer Systembaustein kann problemlos eingebunden werden.

Hierzu muss lediglich ein entsprechend ausgestaltetes Informationsmodul implementiert und eine spezifische Kennung zugeteilt werden.

Die Zuordnung eines Informationsmoduls zu dem jeweiligen Systembaustein erfolgt daher bevorzugt über die Kennung. Insbesondere erfolgt die Zuordnung ausschließlich über die Kennung.

In zweckdienlicher Ausgestaltung werden bei mehrfacher Verwendung eines Systembausteins dessen Informationsmodul mehrere Kennungen zugeordnet, und für jede Kennung wird im Informationsmodul ein unterschiedlicher Datensatz angelegt. Es muss also jeweils nur ein Informationsmödul pro Systembaustein vorhanden sein, selbst wenn dieser mehrfach vergeben wird. Dies hat den Vorteil, dass die im Informationsmodul gespeicherten allgemeinen Informationen über den Systembaustein nur einmal abgelegt werden brauchen.

Vorzugsweise ist für eine einfache Zuordnung in einer Speichertabelle jeder Kennung ein spezielles Informationsmodul zugeordnet (über die Typkennung). Auf diese Weise ist ein einfaches Orientieren oder "Navigieren" der Projektierungssoftware ermöglicht.

Vorteilhafterweise wird bei der Ermittlung der Topologie des ausgewählten Systembausteins sogleich ermittelt, ob eine und welch eine räumliche Struktur der weitere Systembaustein im Hinblick auf die Position/Positionierungsmöglichkeit zusätzlicher Systembausteine aufweist. Vorzugsweise wird dabei die Struktur des weiteren Systembausteins - analog wie die des ausgewählten Systembausteins - ermittelt und dargestellt. Die Topologie des ausgewählten Systembausteins bildet eine erste und die Topologie des weiteren Systembausteins eine weitere Topologieebene. Damit ist in einfacher Weise ermöglicht, Topologien unterschiedlichster Komplexität mit einer Vielzahl von Topologieebenen für ein Steuerungssystem mit vergleichsweise geringem Aufwand darzustellen. Ein wesentliches Element ist hierbei die Kennung, die für die Projektierungssoftware ein problemloses Navigieren selbst durch komplexe Strukturen ermöglicht. Wesentlich hierfür ist die geeignete Ausbildung der den jeweiligen Informationsmodulen zugeordneten Schnittstellen, die beispielsweise als sogenanntes "COM Interface" ausgebildet sind. Dieses COM Interface ist insbesondere als Schlüssel/Kennung für das jeweilige Informationsmodul ausgebildet.

Die Navigation durch den räumlichen Aufbau des Steuerungssystems erfolgt dabei derart, dass ausgehend von dem ausgewählten Systembaustein anhand der ihm zugeordneten Kennung die Projektierungssoftware zu dem entsprechenden Informationsmodul navigiert, und von diesem über die Schnittstelle die Topologieinformationen erhält. Sind einige Positionen mit weiteren Systembausteinen belegt, so werden der Projektierungssoftware deren Kennungen von dem Informationsmodul des ausgewählten Systembausteins übermittelt. Im nächsten Schritt steuert die Projektierungssoftware das der jeweiligen Kennung zugeordnete Informationsmodul an und ruft die zu dieser Kennung zugehörigen Topologieinformationen ab. Jedes Informationsmodul eines Systembausteins beinhaltet also Querverweise auf die ihm nachfolgende Topologieebene, die weitere Systembausteine aufweist.

Die Aufgabe wird gemäß der Erfindung weiterhin gelöst durch ein Verarbeitungssystem gemäß Anspruch 14.

Die im Hinblick auf das Verfahren aufgeführten Vorteile und bevorzugten Ausgestaltungen sind sinngemäß auf das Verarbeitungssystem zu übertragen. Vorteilhafte Ausgestaltungen des Verarbeitungssystems sind in den Unteransprüchen niedergelegt.

Ein Ausführungsbeispiel der Erfindung wird im Folgenden anhand der Zeichnung näher erläutert. Es zeigen:
- FIG 1: die schematische Darstellung der räumlichen Struktur eines Steuerungssystems,
- FIG 2: eine schematische Darstellung eines Verarbeitungssystems zur Durchführung des Verfahrens zur Ermittlung der räumlichen Struktur des Steuerungssystems, und
- FIG 3: die Darstellung der räumlichen Struktur gemäß FIG 1, wobei jedem Systembaustein eine Schnittstelle zur Übermittlung von Informationen an eine Projektierungssoftware zugeordnet ist.

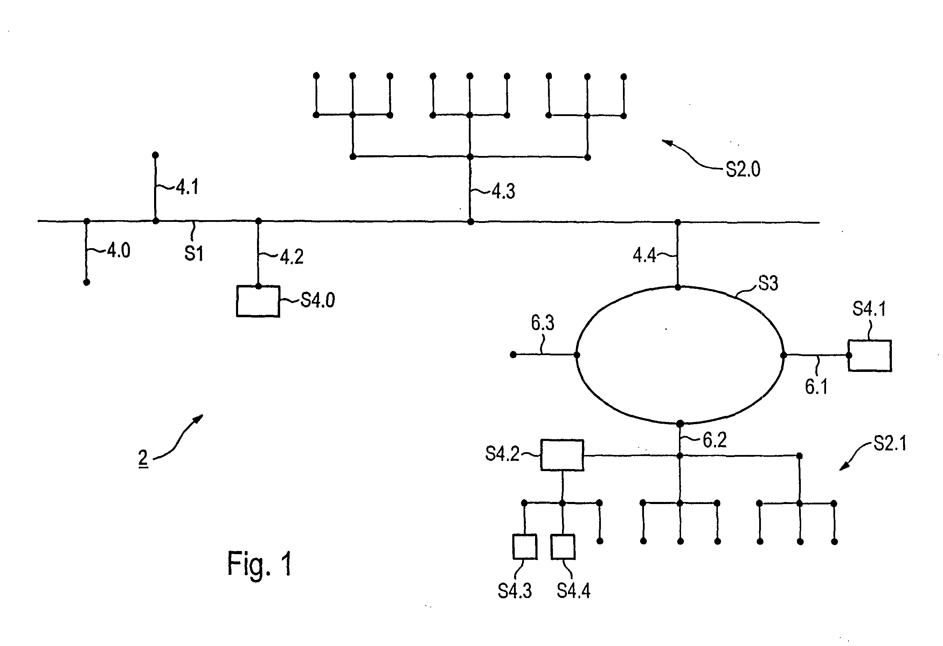

Die räumliche Struktur oder auch Topologie eines Steuerungssystems 2 gemäß FIG 1 umfasst eine Mehrzahl unterschiedlicher Systembausteine S1-S4. Das Steuerungssystem 2 weist als ausgewählten Systembaustein, auch als Hauptsystembaustein bezeichnet, ein Bussystem S1, beispielsweise einen Feldbus, mit fünf Anschlusspositionen 4.0-4.4 auf. Das Bussystem S1 umfasst hierbei lediglich eine Ebene. Während die Positionen 4.0 und 4.1 unbelegt sind, sind an den Positionen 4.2 bis 4.4 jeweils unterschiedliche Systembausteine S2.0, S3, S4.0. vorgesehen. Die erste Ziffer für die Bezeichnung der Systembausteine gibt hierbei eine Typkennung und die zweite Ziffer eine Instanzkennung an. An der Anschlussposition 4.2 ist dabei als Systembaustein eine Endkomponente S4.0 ohne eigene weitere räumliche Struktur angeschlossen. Diese Endkomponente S4.0 ist beispielsweise ein Anzeige- oder Eingabegerät.

An der Anschlussposition 4.3 ist als Systembaustein eine Steuerungssystemeinheit S2.0 angeschlossen, welche eine eigene räumliche Struktur, und zwar eine Baumstruktur mit mehreren Anschlussmöglichkeiten auf 2 Ebenen aufweist. Eine derartige Steuerungssystemeinheit S2 stellt beispielsweise auf der ersten Ebene eine Anzahl von Schaltkästen oder Racks zur Verfügung, die wiederum in der zweiten Ebene eine Anzahl von Steckplätzen, insbesondere für Endkomponenten S4, aufweisen.

An der Anschlussposition 4.4 ist als Systembaustein ein Ringbus S3 mit drei Anschlusspositionen 6.1 bis 6.3 angeschlossen. An die Anschlussposition 6.1 ist hierbei in der nächsten Ebene eine Endkomponente S4.1 angeschlossen. An der Anschlussposition 6.2 ist eine weitere Steuerungssystemeinheit S2.1 vorgesehen, die die gleiche Grundtopologie wie die Steuerungssystemeinheit S2.0 aufweist. Sie unterscheiden sich lediglich im Hinblick auf die spezielle Belegung ihrer Anschlusspositionen. Einige der Anschlusspositionen der weiteren Steuerungssystemeinheit S2.1 sind mit Endkomponenten S4.2-S4.4 belegt. Der Einfachheit halber wird hier zwischen den Endkomponenten S4 nicht unterschieden. In der Regel werden jedoch an den unterschiedlichen Positionen Endkomponenten S4 mit unterschiedlichen Funktionen angeordnet sein, die jeweils eigenständige Systembausteine definieren. Insbesondere kann ein solcher Systembaustein auch durch ein Softwaremodul repräsentiert werden, welches beispielsweise Kommunikationsabläufe zwischen Hardware-Endkomponenten steuert.

Das Steuerungssystem 2 gemäß FIG 1 hat demnach insgesamt drei Topologieebenen. Die erste Ebene wird hierbei von dem Bussystem S1 gebildet. Die zweite Topologieebene wird von den Systembausteinen gebildet, die am Hauptsystembaustein (Bussystem S1) angeschlossen sind und die dritte Topologieebene wird gebildet durch die Systembausteine, die an den Systembausteinen der zweiten Topologieebene angeschlossen sind. Dabei kann - wie beispielsweise die Steuerungssystemeinheiten S2.0 und S2.1 - ein Systembaustein innerhalb einer Topologieebene selbst mehrere Ebenen aufweisen.

Ein derartiges Steuerungssystem 2 verbindet beispielsweise die einzelnen Komponenten einer komplexen Anlage miteinander. Über das Bussystem S1 (Feldbus) werden hierbei weit auseinanderliegende Anlagenteile miteinander verbunden, und mit der Steuerungssystemeinheit S2.0 wird beispielsweise eine abgeschlossene Untereinheit der Gesamtanlage gesteuert. Gleiches gilt für den Ringbus S3 mit den Endkomponenten S4, und der Steuerungssystemeinheit S2.1, welche beispielsweise zur Steuerung eines weiteren Untersystems der Gesamtanlage verwendet wird.

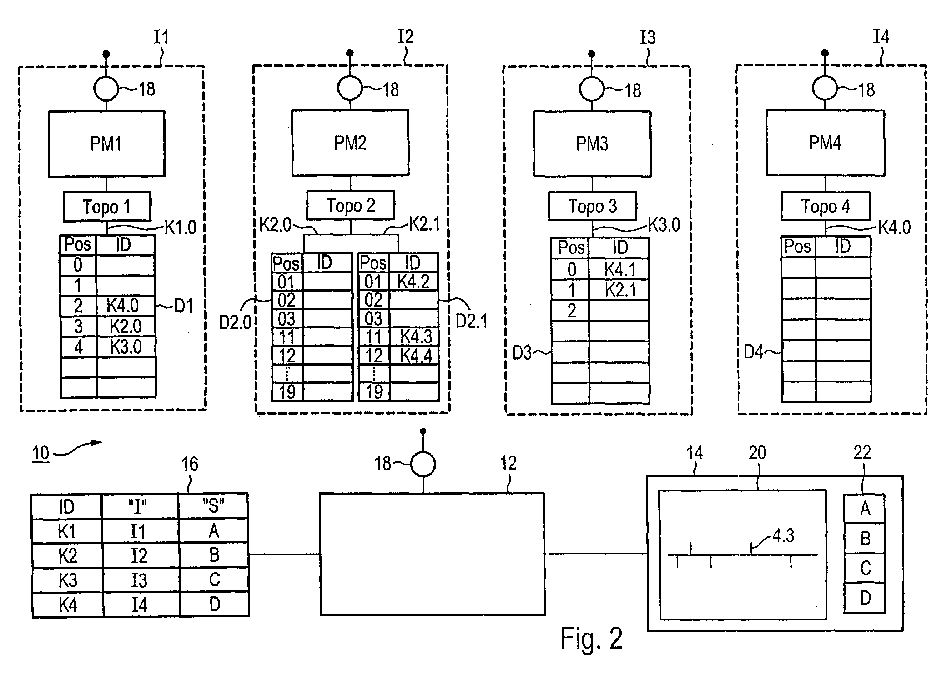

Das Verfahren zur automatischen Ermittlung der räumlichen Struktur (Topologie) des Steuerungssystems 2 im Hinblick auf die Positionen/Positionierungsmöglichkeiten von miteinander kombinierbaren Systembausteinen S1 bis S4 wird im Folgenden anhand eines Verarbeitungssystems 10 gemäß FIG 2 erläutert. Das Verarbeitungssystem 10 umfasst vier Informationsmodule I1 bis I4, die jeweils den Systembausteinen S1 bis S4 gemäß FIG 1 zugeordnet sind. Das Verarbeitungssystem 10 umfasst weiterhin eine Anwender- oder Projektierungssoftware 12, eine Ausgabeeinheit 14 in Form eines Bildschirms mit einem Display 20 und einem Auswahlfeld 22, sowie eine Speichertabelle 16, auf die die Projektierungssoftware 12 zugreift. Das Verarbeitungssystem 10 ist beispielsweise auf einer lokalen Rechnereinheit installiert, die gesamten für das Verarbeitungssystem notwendigen Informationen sind also zentral zugänglich.

Die einzelnen Informationsmodule I1 bis I4 weisen jeweils eine Schnittstelle 18, ein Programmmodul PM1 bis PM4 sowie eine Informationseinheit Topo 1 bis Topo 4 auf. Die Programmmodule PM1 bis PM4 enthalten allgemeine programmtechnische Komponenten zu dem jeweiligen Systembaustein, die diesen charakterisieren und beispielsweise seine Implementierung in das Steuerungssystem 2 ermöglichen. In den Informationseinheiten Topo 1 bis Topo 4 sind Informationen über die räumliche Grundstruktur des jeweils zugeordneten Systembausteins S1 bis S4 niedergelegt. Im Falle des Systembausteins S1, also des Feldbuses, würde diese Topologieinformation über die Grundstruktur darin bestehen, dass es sich bei dem Systembaustein S1 um ein Feldbussystem mit insgesamt vier Anschlusspositionen handelt. Diese Topologieinformation gemäß der Informationseinheit Topo 1 ist beispielhaft in dem Display 20 der Ausgabeeinheit 14 dargestellt. Zusätzlich zu der Informationseinheit Topo 1 bis Topo 4 weisen die Informationsmodule I1 bis I4 jeweils Datensätze D1 bis D4 auf, in denen Informationen über die spezifische Ausgestaltung der Topologie des jeweiligen Systembausteins S1-S4 niedergelegt sind. Die Datensätze D1 bis D4 enthalten demnach Informationen, welche Positionen mit welchen weiteren Systembausteinen belegt sind.

Die Datensätze D1 bis D4 sind hierzu schematisch als Tabelle dargestellt, deren erste Spalte die Position des Systembausteins S1 bis S4 und die zweite Spalte die Kennnummer (ID) des Systembausteins S1 bis S4 angibt, der diese Position belegt. Der Aufbau des Steuerungssystems 2 gemäß FIG 1 ist in den Datensätzen D1 bis D4 gemäß FIG 2 wiedergegeben. Anhand des Datensatzes D1 ist dabei zu erkennen, dass die Position 0 und 1 des Systembausteins 1 nicht belegt sind, während die Position 2 mit einem Systembaustein belegt ist, dem die Kennnummer oder Kennung K4.0 zugeordnet ist. Gleiches gilt für die Positionen 3 und 4, denen jeweils ein Systembaustein mit der Kennung K2.0 und K3.0 zugeordnet ist.

Das Informationsmodul I2 weist insgesamt zwei Datensätze D2 und D2.1 auf, da - wie FIG 1 zu entnehmen ist - der Grundaufbau des Systembausteins S2 in dem Steuerungssystem 2 zweimal verwendet wird, wobei die beiden Steuerungsbausteine S2.0 und S2.1 im Hinblick auf ihre konkrete Ausgestaltung unterschiedlich aufgebaut sind. Zur eindeutigen Identifizierung ist es daher notwendig, dass jedem speziellen Systembaustein S2.0 und S2.1 eine eigene Kennung zugeordnet ist, und dass das Informationsmodul I2 der jeweiligen Kennung zugeordnete spezifische Topologieinformationen bereitstellt. Die Datensätze D2.0 und D2.1 sind jeweils der Kennung K2.0 und K2.1 zugeordnet (K2 = Typkennung, .0, .1 = Instanzkennung). Dabei ist der Systembaustein S2.0 mit der Kennung K2.0 an der Position 3 des Systembausteins S1 angeordnet, wie dem Datensatz D1 des Informationsmoduls I1 zu entnehmen ist.

Die Positionsangaben in den Datenspeichern D2.0 und D2.1 bestehen aus zwei Ziffern, wobei die erste Ziffer die erste Ebene des Systembausteins S2 und die zweite Ziffer dessen zweite Ebene angibt. Auf der ersten Ebene sind demnach insgesamt drei Positionen möglich (01-03), und in der zweiten Ebene insgesamt neun Positionen (11-19). Da an dem Systembaustein S2.0 keine weiteren Systembausteine angeschlossen sind, ist die zweite Spalte im Datensatz D2.0 frei. Demgegenüber ist gemäß Datensatz D2.1 die Position 1 des Systembausteins S2.1 (vgl. FIG 1) mit einem Systembaustein mit der Kennung K4 (also einer Endkomponente) belegt, ebenso wie die Positionen 11 und 12. Nach dem gleichen System ist auch der Datenspeicher D3 belegt. Der Datenspeicher D4 ist prinzipiell leer, da die die Systembausteine S4 repräsentierenden Endkomponenten keine eigenen Positionsmöglichkeiten für den Anschluss weitere Systembausteine aufweisen.

In der Speichertabelle 16 ist die Zuordnung der Kennnummer bzw. Kennung zu dem jeweiligen Informationsmodul I1 bis I4 sowie beispielsweise zu einer beschreibenden Bezeichnung des jeweiligen Systembausteins S1 bis S4 abgelegt. Die beschreibende Bezeichnung ist durch die Buchstaben A bis D angedeutet, die jeweils einen bestimmten Systembaustein repräsentieren.

Zur Projektierung eines komplexen Steuerungssystems 2 geht der Anwender (Bedienpersonal) folgendermaßen vor: Die Projektierungssoftware 12 bietet dem Anwender auf der Ausgabeeinheit 14 ein Auswahlfeld 22 an, in dem die unterschiedlichen, prinzipiell zur Verfügung stehenden Systembausteine S1-S4 namentlich mit A-D benannt sind. Der Anwender wählt in bekannter Art und Weise durch Anklicken und Ziehen des den Systembaustein repräsentierenden Symbols auf das Display 20 einen speziellen Symbolbaustein aus. Die Projektierungssoftware 12 ordnet dann mit Hilfe der Speichertabelle 16 zu, welches Informationsmodul dem Namen des Systembausteins zugeordnet ist und navigiert über seine Schnittstelle 18 zu dem entsprechenden Informationsmodul. Im vorliegenden Fall wurde beispielsweise der namentliche Systembaustein A ausgewählt (repräsentiert Systembaustein S1), dem das Informationsmodul I1 zugeordnet ist. Von I1 bekommt die Projektierungssoftware 12 die Topologieinformation aus der Informationseinheit Topo 1 zur Verfügung gestellt. Zu Beginn der Projektierung ist der Datensatz D1 leer, so dass lediglich die Grundtopologie vom Informationsmodul I1 übermittelt wird. Diese Grundtopologie wird auf dem Display 20 beispielsweise in der dargestellten Form aufgezeigt. Beginnend von der Auswahl des namentlichen Systembausteins durch den Anwender läuft das Verfahren zur Ermittlung der diesem Systembaustein zugeordneten räumlichen Struktur voll automatisch ab und der Anwender erhält sofort einen Aufschluss darüber, an welchen Positionen er weitere Systembausteine anbringen kann.

Im nächsten Schritt belegt er beispielsweise die Position 4.3 des dargestellten und von ihm ausgewählten Feldbusses mit dem ihm namentlich bekannten Systembaustein B (repräsentiert Systembaustein S2). Nunmehr ermittelt in gleicher Weise wie zuvor die Projektierungssoftware 12 automatisch die Topologie des Systembausteins B und navigiert hierzu mit Hilfe der Speichertabelle 16 zu dem Informationsmodul I2. Von diesem erhält sie über die Schnittstelle 18 die Grundtopologieinformation aus der Informationseinheit Topo 2 und stellt sie an der Position 4.3 graphisch dar. Es besteht auch die Möglichkeit, den Systembaustein A zunächst durch ein Symbol an dieser Position darzustellen und die vollständige Struktur erst auf ein Eingabesignal des Anwenders darzustellen. Gleichzeitig mit Belegung der Position 4.3 mit dem Systembaustein B veranlasst die Projektierungssoftware 12, dass im Datensatz D1 an der Position 3 die Kennung K2.0 für den Systembaustein S2.0 hinterlegt wird. Diese Schritte wiederholen sich sukzessive bis der Anwender die Projektierung beendet hat oder unterbricht. Nach der Projektierung sind alle relevanten Informationen im Hinblick auf die Topologie des gesamten Steuerungssystems 2 im Verarbeitungssystem 10 niedergelegt.

Besteht nun Bedarf, dieses Steuerungssystem 2 zu erweitern oder zu verändern, so wird in gleicher Weise von der Projektierungssoftware 12 die bestehende räumliche Struktur des Steuerungssystems ermittelt. Für den Start dieses Verfahrens bedarf es lediglich eines Hinweises, dass der ausgewählte oder Hauptsystembaustein durch S1 repräsentiert wird. Anhand dieser Information navigiert die Projektierungssoftware 12 zum Informationsmodul I1, ruft also von dort die Topologieinformation ab und stellt sie graphisch auf dem Display 20 dar. Zugleich erhält die Projektierungssoftware 12 die Information, dass einige Positionen belegt sind und erhält die Kennungen K2.0 bis K4.0 der weiteren Systembausteine S2-S4 an diesen Positionen. Anhand der Kennungen ordnet die Projektierungssoftware 12 über die Speichertabelle 16 zu, welches Informationsmodul I2-I4 zuständig ist und ruft von diesen die weitergehenden Topologieinformationen bezüglich der zweiten Topologieebene ab. Für jeden weiteren Systembaustein S2-S4 erkennt das System hierbei automatisch, ob an diesem Systembaustein S2-S4 weitere Systembausteine S2-S4 und wo diese Systembausteine S2-S4 angeordnet sind. So wird in einfacher Weise und voll automatisch die vollständige Topologie des Steuerungssystems aufgebaut und kann am Display 20 dargestellt werden.

Ein wesentliches Element hierbei ist, dass die Projektierungssoftware 12 selbst keine Detailkenntnisse über die jeweiligen Systembausteine S1-S4 aufweisen muss, da die Navigation unabhängig von den spezifischen Merkmalen der jeweiligen Systembausteine S1-S4 erfolgt. Vielmehr ist eine abstrakte, herstellerneutrale Kennung K1-K4 vorgesehen, die ein einfaches und schnelles Zuordnen und Navigieren ermöglicht, um die notwendigen Informationen schnell abrufen zu können. Insbesondere bietet dieses System in einfacher Weise die Möglichkeit, einen neuen Systembaustein aufzunehmen. Hierzu ist es lediglich notwendig ein dem neuen Systembaustein charakterisierendes weiteres Informationsmodul vorzusehen und die Speichertabelle 16 entsprechend erweitern.

Gemäß einer bevorzugten Ausgestaltung übernehmen die den jeweiligen Informationsmodulen I1 bis I4 zugeordneten Schnittstellen 18 auch Funktionen bezüglich der Kennung. Eine derartige Schnittstelle ist beispielsweise als sogenanntes COM-Interface ausgebildet. Vorzugsweise erzeugen die jeweiligen Informationsmodule I1-I4 selbst die ihnen zugeordnete Instanz- und Typkennung und bieten diese als abstrakte Information an der Schnittstelle (COM-Interface) an. Somit ist die Kennung den anderen Informationsmodulen und der Projektierungssoftware zugänglich.

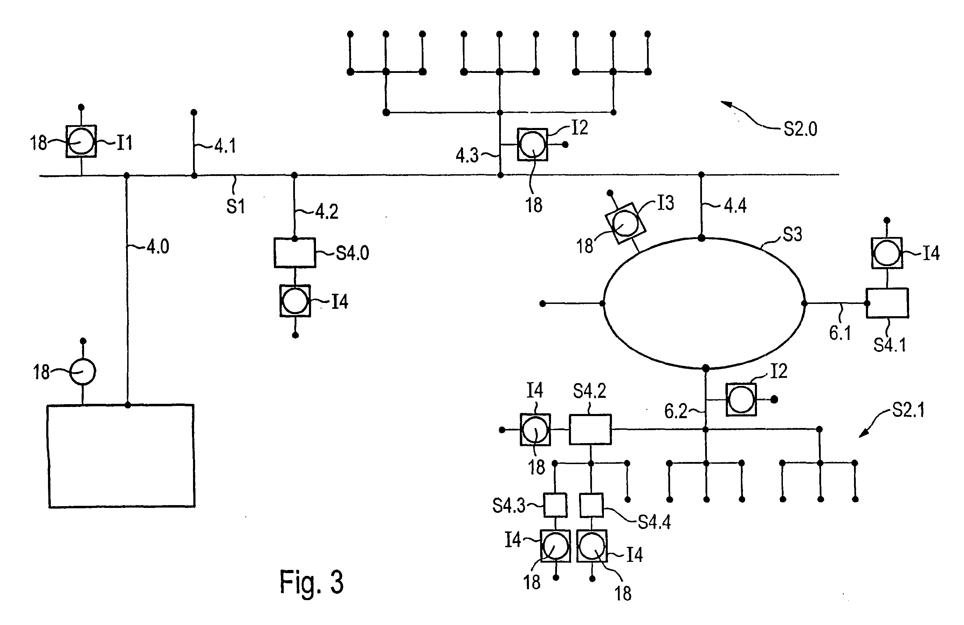

Bisher wurde davon ausgegangen, dass die Informationen zentral an einem Ort abgelegt sind. Alternativ hierzu ist gemäß FIG 3 vorgesehen, dass die speziellen Informationen bezüglich der einzelnen Systembausteine S1-S4 unmittelbar vor Ort, also dezentral am Ort der jeweiligen Systembausteine S1-S4 niedergelegt sind. Dabei ist natürlich auch eine Mischung zwischen zentraler Speicherung und dezentraler Speicherung möglich. In FIG 3, in der ein Steuerungssystem 2 mit gleichem Aufbau wie in FIG 1 dargestellt ist, ist die dezentrale Speicherung dadurch angedeutet, dass an den Systemkomponenten S1 bis S4 die jeweiligen Informationsmodule 11 bis 14 mit den Schnittstellen 18 zugeordnet sind. Zur Ermittlung der bestehenden räumlichen Struktur des Steuerungssystems 2 wird beispielsweise die Projektierungssoftware 12 an das Bussystem S1 angebunden und ruft zunächst die Information über die räumliche Struktur des Bussystems S1 aus dem Informationsmodul I1 ab. Der Aufbau der räumlichen Struktur erfolgt in gleicher Weise wie zur FIG 2 beschrieben, mit dem Unterschied, dass die einzelnen Informationsmodule I1-I4 nicht zentral gespeichert sind, sondern dass diese direkt dezentral vor Ort abgerufen werden müssen. Die Kommunikation erfolgt hierbei über das Bussystem.

## Patentansprüche

1. Verfahren zur Ermittlung der Topologie eines Steuerungssystems (2) im Hinblick auf die Positionen/Positionierungsmöglichkeiten (4.1-4.4;6.1-6.3) von Systembausteinen (S1-S4), bei dem Informationen über die Topologie eines ausgewählten Systembausteins (S1) im Hinblick auf die Position/Positionierungsmöglichkeit von weiteren Systembausteinen (S2-S4) ermittelt werden, indem
- ein den Systembausteinen (S1-S4) jeweils zugeordnetes Informationsmodul (I1-I4) vorgesehen ist, das Informationen über die Topologie des jeweiligen Systembausteins (S1-S4) aufweist, und indem
- die Informationen über die Topologie des ausgewählten Systembausteins (S1) über eine dessen Informationsmodul (I1) zugeordnete Schnittstelle (18) abgefragt und anschließend weiterverarbeitet werden.

2. Verfahren nach Anspruch 1, bei dem die Topologie graphisch dargestellt wird.

3. Verfahren nach Anspruch 1 oder 2, bei dem bei der Ermittlung der Positionen/Positionierungsmöglichkeiten (4.1-4.4; 6.1-6.3)erfasst wird, ob eine der Positioniermöglichkeiten mit einem weiteren Systembaustein (S2-S4) belegt ist.

4. Verfahren nach einem der vorhergehenden Ansprüche, bei dem im Informationsmodul (I1) abgespeichert wird, wenn eine Position (4.3,4.4)) von einem weiteren Systembaustein (S2-S4) belegt wird.

5. Verfahren nach Anspruch 4, bei dem abgespeichert wird, welche Position (4.3,4.4) mit welchem weiteren Systembaustein (S2-S4) belegt wurde.

6. Verfahren nach einem der Ansprüche 2 bis 5, bei dem in der graphischen Darstellung an der Position (4.3,4.4), welche mit einem weiteren Systembaustein (S2-S4) belegt ist, dieser graphisch dargestellt wird.

7. Verfahren nach einem der vorhergehenden Ansprüche, bei dem jedem Systembaustein (S1-S4) eine Kennung (K1-K4) zugeordnet ist.

8. Verfahren nach den Ansprüchen 7 und 5, bei dem die Zuordnung eines Informationsmoduls (I1-I4) zu dem jeweiligen Systembaustein (S1-S4) über die Kennung (K1-K4) erfolgt.

9. Verfahren nach Anspruch 7 oder 8, bei dem bei mehrfacher Verwendung eines Systembausteins (S2) dessen Informationsmodul (I2) mehrere Kennungen (K2.0,K2.1) zugeordnet werden, und für jede Kennung (K2.0,K2.1) im Informationsmodul (I2) ein unterschiedlicher Datensatz (D2.0,D2.1) angelegt wird.

10. Verfahren nach einem der Ansprüche 7 bis 9, bei dem in einer Speichertabelle (16) jeder Kennung (K1-K4) ein spezielles Informationsmodul (I1-I4) zugeordnet ist.

11. Verfahren nach einem der Ansprüche 3 bis 10, bei dem ermittelt wird, ob eine und welche eine Topologie der weitere Systembaustein (S2-S4) im Hinblick auf die Position/Positionierungsmöglichkeit (6.1-6.3) zusätzlicher Systembausteine (S1-S4) aufweist.

12. Verfahren nach Anspruch 11 bei dem die Topologie des weiteren Systembausteins (S2-S4) über eine dessen Informationsmodul (I2-I4) zugeordnete Schnittstelle (18) abgefragt wird.

13. Verfahren nach Anspruch 11 oder 12, bei dem die Topologie des ausgewählten Systembausteins (S1) zusammen mit der des weiteren Systembausteins (S2-S4) dargestellt wird.

14. Verarbeitungssystem (10) zur Ermittlung der Topologie eines Steuerungssystems (2) im Hinblick auf die Position/Positionierungsmöglichkeit (4.1-4.4;6.1-6.3) von Systembausteinen (S1-S4), bei dem
- Informationen über die Systembausteine (S1-S4) abgelegt sind, die jeweils eine definierte räumliche Struktur im Hinblick auf die mögliche Positionierung von weiteren Systembausteinen (S2-S4) haben,
- jedem Systembaustein (S1-S4) ein Informationsmodul (I1-I4) zugeordnet ist, das Informationen über die Topologie des jeweiligen Systembausteins (S1-S4) aufweist,
- jedem Informationsmodul (11-14) eine Schnittstelle (18) zugeordnet ist, über die die Informationen über die Topologie übermittelbar ist,
- eine Projektierungssoftware (12) vorgesehen ist, mit deren Hilfe über die Schnittstelle (18) die Topologie eines ausgewählten Systembausteins (S1) abfragbar ist, und bei dem
- die ermittelte Topologie einer Ausgabeeinheit (14) zuführbar ist.

15. Verarbeitungssystem (10) nach Anspruch 14, bei dem die Ausgabeeinheit (14) für eine graphische Wiedergabe der ermittelten Topologie ausgebildet ist.

16. Verarbeitungssystem (10) nach Anspruch 14 oder 15, bei dem jedem der Informationsmodule (I1-I4) ein Datensatz (D1-D4) zugeordnet ist, in dem die Informationen über den jeweiligen Systembaustein (S1-S4) abgelegt sind, und in dem Änderungen an der Topologie des Systembausteins (S1-S4) hinterlegbar sind.

## Claims

1. Method for determining the topology of a control system (2) with respect to the positions/positioning possibilities (4.1-4.4;6.1-6.3) of system modules (S1-S4), in which information on the topology of a selected system module (S1) is determined with respect to the position/positioning possibility of further system modules (S2-S4), in that
- an information module (I1-I4) which is respectively assigned to the system modules (S1-S4) and which has information on the topology of the respective system module (S1-S4) is provided, and in that
- the information on the topology of the selected system module (S1) is interrogated via an interface (18) which is assigned to its information module (I1), and is subsequently further processed.

2. Method according to Claim 1, in which the topology is represented graphically.

3. Method according to Claim 1 or 2, in which, during the determination of the positions/positioning possibilities (4.1-4.4;6.1-6.3), it is detected whether one of the positioning possibilities is occupied by a further system module (S2-S4).

4. Method according to one of the preceding claims, in which information indicating if a position (4.3,4.4)) is occupied by a further system module (S2-S4) is stored in the information module (I1).

5. Method according to Claim 4, in which information indicating which position (4.3,4.4) has been occupied by which further system module (S2-S4) is stored.

6. Method according to one of Claims 2 to 5, in which a further system module (S2-S4) is graphically represented in the graphic representation at the position (4.3,4.4) which is occupied by this further system module (S2-S4).

7. Method according to one of the preceding claims, in which each system module (S1-S4) is assigned an identifier (K1-K4).

8. Method according to Claims 7 and 5, in which an information module (I1-I4) is assigned to the respective system module (S1-S4) by means of the identifier (K1-K4).

9. Method according to Claim 7 or 8, in which when a system module (S2) is used repeatedly its information module (I2) is assigned a plurality of identifiers (K2.0,K2.1), and a different data record (D2.0,D2.1) is created for each identifier (K2.0,K2.1) in the information module (I2).

10. Method according to one of Claims 7 to 9, in which each identifier (K1-K4) is assigned a specific information module (I1-I4) in a memory table (16).

11. Method according to one of Claims 3 to 10, in which it is determined whether the further system module (S2-S4) has a topology, and which topology, with respect to the position/positioning possibility (6.1-6.3) of additional system modules (S1-S4) .

12. Method according to Claim 11, in which the topology of the further system module (S2-S4) is interrogated via an interface (18) which is assigned to its information module (I2-I4).

13. Method according to Claim 11 or 12, in which the topology of the selected system module (S1) is represented together with that of the further system module (S2-S4).

14. Processing system (10) for determining the topology of a control system (2) with respect to the position/positioning possibility (4.1-4.4;6.1-6.3) of system modules (S1-S4), in which
- information is stored on the system modules (S1-S4) which each have a defined spatial structure with respect to the possible positioning of further system modules (S2-S4),
- each system module (S1-S4) is assigned an information module (I1-14) which has information on the topology of the respective system module (S1-S4),
- each information module (I1-I4) is assigned an interface (18) via which the information on the topology can be transferred,
- a planning software package (12) is provided by means of which the topology of a selected system module (S1) can be interrogated via the interface (18), and in which
- the determined topology can be fed to an output unit (14).

15. Processing system (10) according to Claim 14, in which the output unit (14) is designed to graphically represent the topology which is determined.

16. Processing system (10) according to Claim 14 or 15, in which each of the information modules (I1-I4) is assigned a data record (D1-D4) in which the information on the respective system module (S1-S4) is stored, and in which changes to the topology of the system module (S1-S4) can be stored.

## Revendications

1. Procédé de détermination de la topologie d'un système de commande (2) eu égard aux possibilités de positions /positionnement (4.1 à 4.4 ; 6.1 à 6.3) de composants de système (S1 à S4), dans lequel on détermine des informations sur la topologie d'un composant de système sélectionné (S1) eu égard à la possibilité de position / positionnement d'autres composants de système (S2 à S4),
- un module d'information (I1 à I4) associé à chacun des composants de système (S1 à S4) étant prévu, lequel comporte des informations sur la topologie du composant de système respectif (S1 à S4), et
- les informations sur la topologie du composant de système sélectionné (S1) étant demandées par l'intermédiaire d'une interface (18) associée au module d'information (I1) de celui-ci et étant ensuite traitées.

2. Procédé selon la revendication 1, dans lequel la topologie est représentée graphiquement.

3. Procédé selon la revendication 1 ou 2, dans lequel, lors de la détermination des possibilités de positions /positionnement (4.1 à 4.4 ; 6.1 à 6.3), on détecte si l'une des possibilités de positionnement est occupée par un autre composant de système (S2 à S4).

4. Procédé selon l'une des revendications précédentes, dans lequel on mémorise dans le module d'information (I1) le fait qu'une position (4.3, 4.4) est occupée par un autre composant de système (S2 à S4).

5. Procédé selon la revendication 4, dans lequel on mémorise quelle position (4.3, 4.4) a été occupée par quel autre composant de système (S2 à S4).

6. Procédé selon l'une des revendications 2 à 5, dans lequel, dans la représentation graphique, à la position (4.3, 4.4) qui est occupée par un autre composant de système (S2 à S4), on représente graphiquement celui-ci.

7. Procédé selon l'une des revendications précédentes, dans lequel un identificateur (K1 à K4) est associé à chaque composant de système (S1 à S4).

8. Procédé selon les revendications 7 et 5, dans lequel l'association d'un module d'information (I1 à I4) au composant de système respectif (S1 à S4) s'effectue par l'intermédiaire de l'identificateur (K1 à K4).

9. Procédé selon la revendication 7 ou 8, dans lequel, dans le cas de multiples utilisations d'un composant de système (S2), plusieurs identificateurs (K2.0, K2.1) sont associés au module d'information (I2) de celui-ci et un ensemble de données différents (D2.0, D2.1) est adjoint à chaque identificateur (K2.0, K2.1) dans le module d'information (I2).

10. Procédé selon l'une des revendications 7 à 9, dans lequel un module d'information spécial (I1 à I4) est associé à chaque identificateur (K1 à K4) dans un tableau de mémoire (16).

11. Procédé selon l'une des revendications 3 à 10, dans lequel on détermine si l'autre composant de système (S2 à S4) a une topologie, et si oui laquelle, eu égard à la possibilité de position / positionnement (6.1 à 6.3) de composants de système supplémentaires (S1 à S4).

12. Procédé selon la revendication 11, dans lequel la topologie de l'autre composant de système (S2 à S4) est demandée par l'intermédiaire d'une interface (18) associée à son module d'information (I2 à I4).

13. Procédé selon la revendication 11 ou 12, dans lequel la topologie du composant de système sélectionné (S1) est représentée conjointement avec celle de l'autre composant de système (S2 à S4) .

14. Système de traitement (10) pour la détermination de la topologie d'un système de commande (2) eu égard à la possibilité de position / positionnement (4.1 à 4.4 ; 6.1 à 6.3) de composants de système (S1 à S4), dans lequel
- des informations sur les composants de système (S1 à S4) sont enregistrées, lesquelles ont à chaque fois une structure spatiale définie eu égard au positionnement possible d'autres composants de système (S2 à S4),
- un module d'information (I1 à I4) est associé à chaque composant de système (S1 à S4), lequel comporte des informations sur la topologie du composant de système respectif (S1 à S4),
- une interface (18) est associée à chaque module d'information (I1 à 14), par l'intermédiaire de laquelle les informations sur la topologie peuvent être transmises,
- un logiciel de développement (12) est prévu, à l'aide duquel la topologie d'un composant de système sélectionné (S1) peut être demandée par l'intermédiaire de l'interface (18), et
- la topologie déterminée peut être envoyée à une unité de sortie (14).

15. Système de traitement (10) selon la revendication 14, dans lequel l'unité de sortie (14) est conçue pour une reproduction graphique de la topologie déterminée.

16. Système de traitement (10) selon la revendication 14 ou 15, dans lequel il est associé à chacun des modules d'information (I1 à I4) un ensemble de données (D1 à D4) dans lequel les informations sur le composant de système respectif (S1 à S4) sont enregistrées et dans lequel des modifications de la topologie du composant de système (S1 à S4) peuvent être enregistrées.
